# EUROPEAN PATENT APPLICATION

(11) **EP 2 236 595 A1**
(43) Date of publication of application: **06.10.2010**
(21) Application number: 09004893.5
(22) Date of filing: 02.04.2009
(51) Int. Cl.: C12G 1/00, C12H 1/00

(54) **Cold stabilization of wine**

(71) Applicant: Linde AG, 80331 München (DE)
(72) Inventor: Lopez, Mario, 31270 Frouzins (FR)
(74) Representative: Kasseckert, Rainer

(57) **Abstract**

Process for the cold stabilization of wine by chilling the wine in a closed tank (T), characterized by feeding a cryogen liquid.

## Description

Tartaric acid (tartar) is a compound found naturally in grapes. After bottling wine, the tartaric acid can crystallize in the bottle forming so-called "wine diamonds". Some customers perceive the presence of the crystals in wine as an indication of poor quality; although it is perfectly natural. Many wineries treat wine before bottling with a process called Cold Stabilization to avoid formation of crystals in the bottle. Cold Stabilization forces crystals of tartaric acid to precipitate as the temperature of wine is reduced to around minus 4 °C in large processing vessels. This is done by mechanical chilling a heat transfer fluid (typically ethylene glycol and water) which in turn is used to cool the wine in the vessel indirectly. The use of a submerged coil or a jacket is disclosed in DE 30 25 677 A1. The treatment time can be reduced to 1,5 to 2 hours by this mechanical cooling.

Some markets prohibit the use of ethylene glycol because it is toxic and can contaminate wine in the event of a leak of the cooling coil or jacket. Eliminating ethylene glycol and many other heat transfer fluids forces winemakers to use simple water for cooling. This limits the temperature they can use for cooling to about 0 °C. And this extents the time for cooling up to weeks.

The use of fluorocarbons for refrigerant is possible but shows the drawback of a global warming potential of these substances.

DE-PS 851 041 describes the stabilization of wine by cooling. In its introduction it discloses the precipitation of tartar by introducing solid carbonic acid into the wine in an open vessel. This results in a considerable loss of flavors.

Object of the invention is to propose an alternative process for cold stabilization of wine not using fluorocarbons.

This object is solved by a process with the steps of claim 1. Embodiments of the invention are subjects of the dependent claims.

Core of the invention is the use of a cryogene liquid which brings a lot of cold in the wine stored in a closed tank. The invention replaces or supplements mechanical cooling with a reliable, more intense and lower global warming potential option for Cold Stabilization.

The invention has the following advantages:
- In some markets power is unreliable so the cold stabilization process is often interrupted; extending the process for weeks.
- The use of an inert cryogen for cooling has the added effect of removing dissolved oxygen from the wine and protecting the wine from further oxygen exposure just before bottling; improving quality and potentially reducing the use of sulfur dioxide.
- The use of fluorocarbons for refrigerant is replaced with cryogen which either has no global warming potential or a very low global warming potential compared to other refrigerants.
- The use of cryogen provides a reliable backup for cooling in the event of failure of the mechanical cooling equipment.
- In some wineries, the Cold Stabilization process is a bottleneck in their process; delaying the bottling process. The invention offers the ability to increase the rate of cooling; shortening the time needed for the Cold Stabilization process.

The closed tank needs to have an adequately sized exhaust opening to allow cryogen vapors to escape from the vessel without increasing the pressure above the allowable working pressure.

The invention includes a control system to monitor the temperature of the wine during the cooling process and to stop the flow of cryogen when the temperature reaches the set point which is in the range of 5 to minus 10 °C; preferably minus 4 °C is an accurate value.

In the preferred embodiment, the cryogenic liquid is nitrogen. Nitrogen is inexpensive and has a high cooling capacity. The temperature of liquid nitrogen is very low so a relative small amount of liquid nitrogen yields a high cooling power.

The liquid nitrogen can be supplied into the tank by 1,2 or more valves which are specialized for feeding cool media or cryogenics into liquids in food applications. Essentially for the use in food applications is the hygienic standard which must be kept high. In an alternative there can be used so called LIX Shooters^{®} from Linde AG in Germany. Another alternative is the use of a special cooling or chilling lance which supplies the liquid directly into the tank.

The valves or the lance should be arranged in the lower part of the tank for resulting in very intimate mixing of the cryogen liquid with the wine for cooling it.

In one embodiment liquid nitrogen is used to cool the wine in tandem with the mechanical cooling system. Mechanical cooling is lower in costs than cryogen cooling, but the physical properties of the heat transfer fluid limit the rate of cooling and the target temperature. Wineries can combine the lower cost cooling available mechanically with the intensity of cooling offered by cryogens to optimize the process. When this parallel process is made, heat exchangers are necessary inside the tank or at least at the shell of the tank.

In another embodiment the invention can be designed with the capacity to provide all the cooling power needed to carry out the process, however, under normal circumstances operated at a lower capacity unless the mechanical system cannot be used due to loss of power or other failure. So all refrigerating capacity can be applied by inserting of the cryogen liquid. This process is nearly independent from outer energy sources and can be made in very short time.

In another embodiment, the invention includes a connection to a CO₂ supply to provide for a final step to replenish CO₂ that may have been removed from the wine during the cooling process by nitrogen. The sparging of nitrogen through the wine leads to an inavoidable loss of the natural carbon dioxide of the wine. With this option the carbon dioxide loss can be compensated by adding the gaseous CO₂.

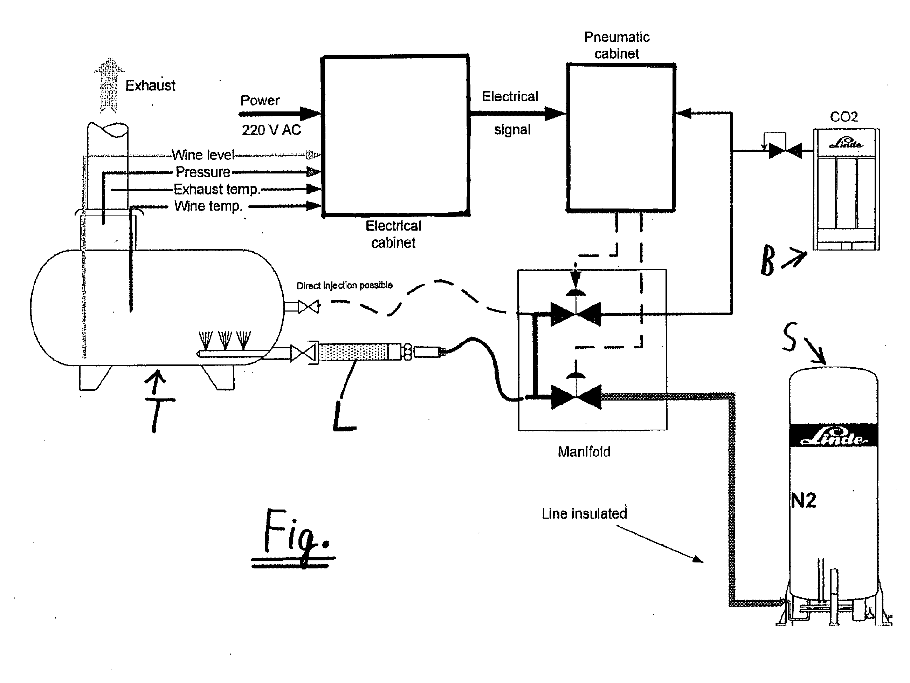

One embodiment of the invention is further shown by means of one figure. The figure shows a storage standing tank S for nitrogen in liquid state, a cylinder bundle B for carbon dioxide and a tank T for the wine with an exhaust. The tank is arranged with a lance L for supplying in the liquid nitrogen from the storage tank S. A manifold is provided for regulating the amount of the nitrogen and/or the amount of carbon dioxide fed to the tank T. With dotted line a direct injection is shown as a possible alternative for supplying carbon dioxide. The wine tank is equipped with some measuring equipment like a liquid gauge for the wine level, a manometer for the pressure and two thermometers for the wine and the exhaust temperature. The measuring equipment transfers its values to the electrical cabinet, where the values are used for emitting electrical signal to the pneumatic cabinet to regulate or steer the amount of liquid nitrogen and/or gaseous CO₂.

## Claims

1. Process for the cooling of wine by chilling the wine in a closed tank (T), **characterized by** feeding a cryogen liquid.

2. Process according to claim 1, whereby the liquid is nitrogen.

3. Process according to claim 1 or 2, **characterized in** special valves or lances (L) for supplying the liquid or gaseous cryogens.

4. Process according to one of the preceding claims, **characterized in that** the valves or lances are arranged in the lower part of the tank (T).

5. Process according to one of the preceding claims, **characterized by** using such amounts of cryogen that supplementing cooling is not necessary.

6. Process according to any one of the preceding claims, **characterized by** supplying CO₂ in a parallel or a second step.
